# EUROPEAN PATENT APPLICATION

(11) **EP 4 748 641 A1**
(43) Date of publication of application: **27.05.2026**
(21) Application number: 25216826.5
(22) Date of filing: 19.11.2025
(51) Int. Cl.: B60N 2/70

(54) **METHOD FOR CUSTOMIZING A SEAT OF A CAR TO BE USED ON A RACING TRACK**

(30) Priority: 20.11.2024 IT 202400026154
(71) Applicant: FERRARI S.p.A., 41100 Modena (IT)
(72) Inventor: TAYLOR, Daniel Martin, 41100 MODENA (IT)
(74) Representative: Studio Torta S.p.A.

(57) **Abstract**

A method to customize a seat (1) of a car to be used on a racing track. The seat (1) has: a base structure (5) which is rigid and is divided into a cushion (2) and a backrest (3) which are movable relative to each other; and an upholstery (6) which is elastically deformable, covers at least partially the base structure (5), and has a series of components (7) which are fixed in a detachable manner to the base structure (5). The customization method entails the steps of: removing all the components (7) of the upholstery (6) from the base structure (5); manufacturing a monolithic containing shell (8) provided with a lower surface (9) shaped to couple with the base structure (5) and an upper surface (10) shaped to accommodate the body of the occupant of the seat (1); arranging and locking the backrest (3) of the base structure (5) in a predetermined position relative to the cushion (2) of the base structure (5); and resting the containing shell (8) on the base structure (5) without the components (7) of the upholstery (6).

## Description

### CROSS-REFERENCE TO RELATED APPLICATIONS

This patent application claims priority from Italian patent application no. 102024000026154 filed on November 20, 2024, the entire disclosure of which is incorporated herein by reference.

### TECHNICAL FIELD

The present invention concerns a method for customizing a seat of a car to be used on a racing track.

### PRIOR ART

The seats are one of the elements of a car that most affects the comfort of the passengers since they constitute the interface via which the passengers come into physical contact with the car. Currently, the seats are designed by seeking the best possible compromise to meet the needs of a wide range of passenger sizes and a wide range of driving conditions (for example for a long journey on public roads, priority should be given to comfort, whereas for high-performance race track driving, priority should be given to lateral containment); consequently, the seats allow almost all people to obtain a good (or in some cases acceptable) level of comfort in all driving conditions but it is much rarer for people to obtain a high level of comfort in all driving conditions.

For the use of a car on a racing track, one solution that has been proposed is installation in the car of seats having a rigid base structure (namely indeformable as a result of the thrust of the body of the occupant sitting on the seat), together with elastically deformable upholstery (namely deformable as a result of the thrust of the body of the occupant sitting on the seat) which is fixed above the base structure, covers at least partially the base structure and constitutes the outermost part of the seat which comes into contact with the body of the occupant of the seat (namely constitutes the aesthetic and tactile interface with the outside). The upholstery comprises a series of replaceable components which are fixed in a removable manner to the base structure: according to the type of use of the car, the upholstery components can be replaced so as to fit softer and more pliable upholstery components for road use (namely for journeys on public roads) and to fit more rigid and constraining upholstery components for use on a racing track. However, although this solution offers a good result, it is not optimal when driving on the racing track is prolonged for a considerable time and entails pushing driving constantly to the limits such as, for example, during an Endurance race.

The patent application WO2006119809A1 describes a seat for a motor vehicle with a cushion and a backrest; the seat has a shell structure made of plastic material and is provided with (deformable) soft foam padding on the side where the vehicle occupant sits.

### DESCRIPTION OF THE INVENTION

The object of the present invention is to provide a method for customizing a seat of a car to be used on a racing track which offers optimal comfort when driving on the track is prolonged for a considerable time and entails pushing driving constantly to the limits.

According to the present invention a method is provided for customizing a seat of a car to be used on a racing track, as claimed in the attached claims.

The claims describe preferred embodiments of the present invention forming an integral part of the present description.

### BRIEF DESCRIPTION OF THE DRAWINGS

The present invention will now be described with reference to the attached drawings, which illustrate a non-limiting embodiment example thereof, in which:
- figure 1 is a perspective schematic view of a seat of a car in a road configuration;
- figure 2 is a perspective schematic view of the seat of figure 1 without the upholstery components;
- figure 3 is a perspective schematic view of a containing shell for the seat of figure 1; and
- figures 4, 5 and 6 schematically show instruments and materials used to produce the containing shell of figure 3.

### PREFERRED EMBODIMENTS OF THE INVENTION

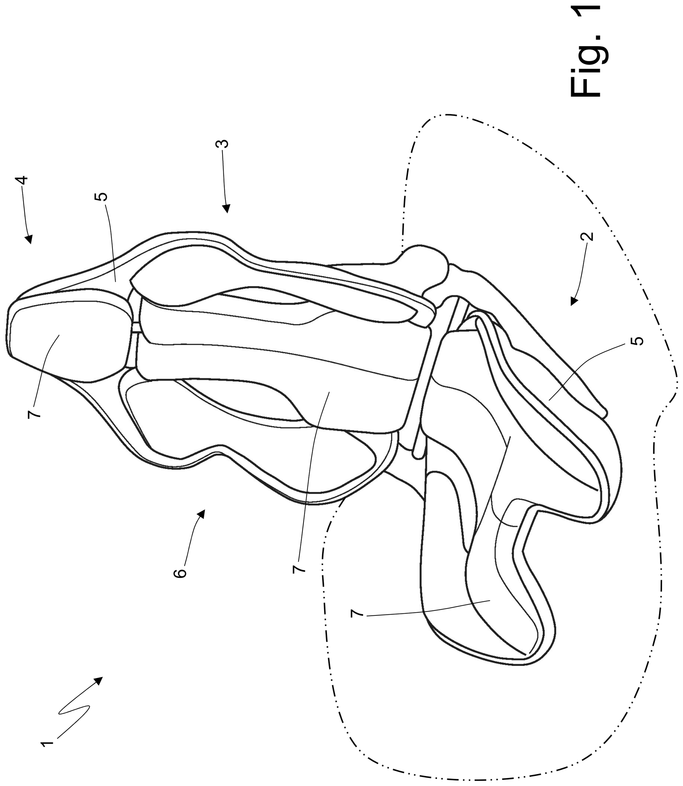

In figure 1, the reference number 1 indicates overall a seat of a car approved for use also on public roads.

The seat 1 is divided into a cushion 2 having a substantially horizontal arrangement and a backrest 3 having a substantially vertical arrangement; together, the cushion 2 and the backrest 3 give the seat 1 an "L" shape. Above the backrest 3, a headrest 4 is arranged, namely the backrest 3 terminates at the top with the headrest 4.

In construction terms, the seat 1 comprises a base structure 5 which is rigid (namely indeformable as a result of the thrust of the body of the occupant sitting on the seat 1) and is configured to be fixed to a floorboard of the car. Consequently, the base structure 5 comprises the cushion 2, the backrest 3 and the headrest 4; namely, the base structure 5 is divided into the cushion 2, the backrest 3 and the headrest 4. The backrest 3 of the base structure 5 is mounted in a movable manner relative to the cushion 2 of the base structure 5 so that the reciprocal position can be modified; in particular, the cushion 2 of the base structure 5 is fixed to a floorboard of the car while the backrest 3 of the base structure 5 is mounted in a revolving manner on the cushion 2 of the base structure 5 to rotate around a horizontal rotation axis and therefore vary (adjust) the angle formed between the backrest 3 of the base structure 5 and the cushion 2 of the base structure 5. The adjustment of the angle of the backrest 3 of the base structure 5 relative to the cushion 2 of the base structure 5 allows the occupant of the seat 1 to find the best position (namely the position which the occupant of the seat 1 finds most comfortable).

Furthermore, the seat 1 comprises an upholstery 6 which is elastically deformable (namely deformable as a result of the thrust of the body of the occupant sitting on the seat 1), is fixed above the base structure 5, covers at least partially the base structure 5 and constitutes the outermost part of the seat 1 which comes into contact with the body of the occupant of the seat 1, namely constitutes the aesthetic and tactile interface with the outside.

The upholstery 6 comprises a series of removable (replaceable) components 7 which are fixed to the base structure 5 in a separable manner by means of a coupling system (known and not illustrated) to be interchangeable. For example, the coupling system comprises for each component 7 of the upholstery 6 a first fixing element integral with the base structure 5 and a second fixing element which is configured to couple to the first fixing element and is integral with the component 7.

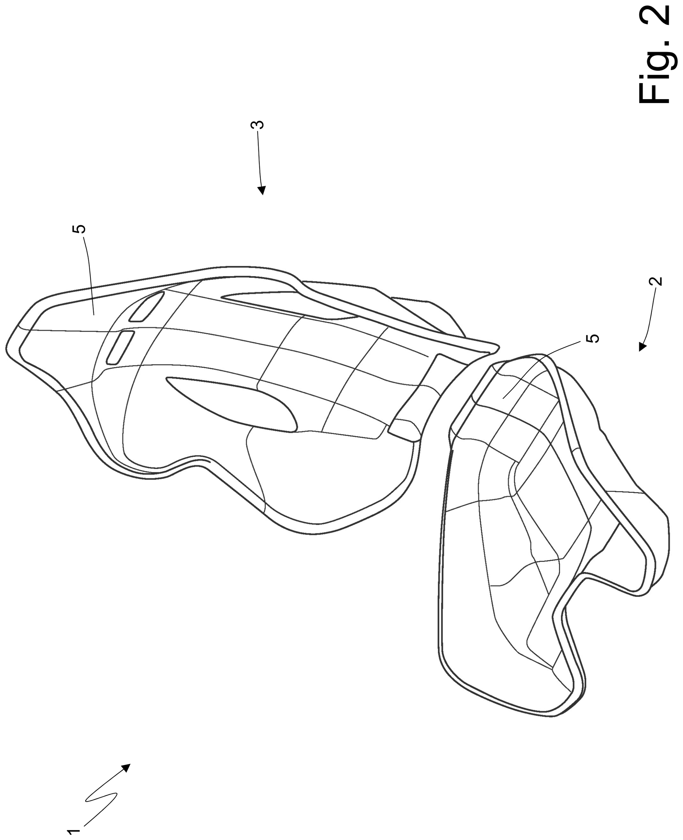

To customize the seat 1 for use on the racing track, the first operation to be performed is removal of all the components 7 of the upholstery 6 so as to leave the base structure 5 *"bare"* (as illustrated in figure 2).

Once all the components 7 of the upholstery 6 have been removed, the backrest 3 of the base structure 5 is arranged and locked (temporarily, namely only for use on the racing track) in a predetermined position relative to the cushion 2 of the base structure 5. In other words, for customization of the seat 1, the backrest 3 of the base structure 5 must be arranged and remain in a unique precise position relative to the cushion 2 of the base structure 5.

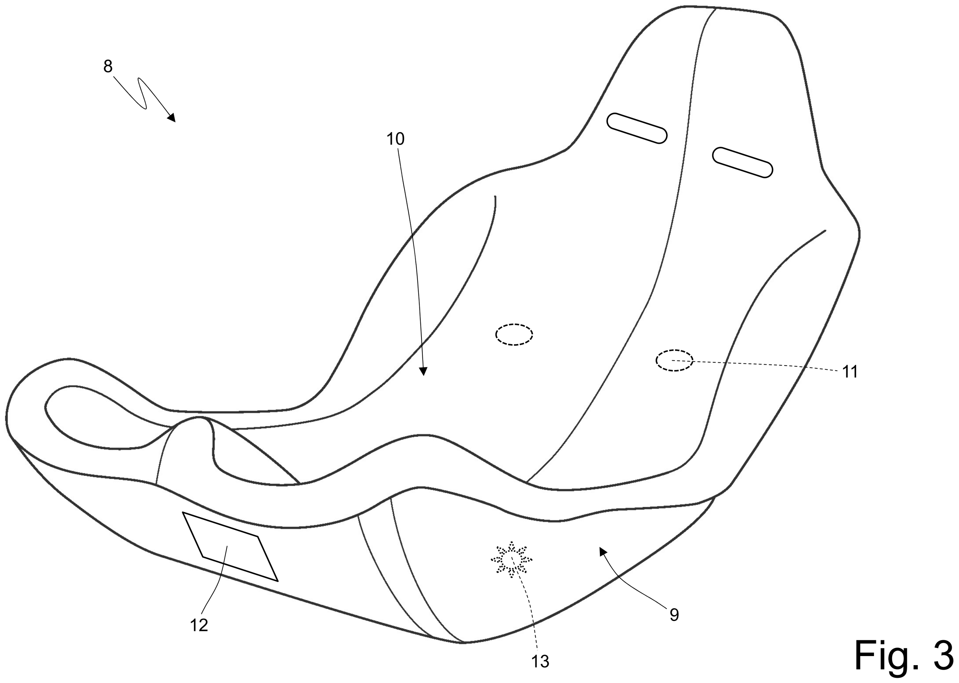

Subsequently, a monolithic (namely composed of one single undivided and indivisible piece) rigid containing shell 8 which is illustrated in figure 3 is laid and preferably coupled on the base structure 5 without the components 7 of the upholstery 6; in other words, the containing shell 8 comprises one single undivided and indivisible rigid body which is obtained from solid (as described below). As illustrated in figure 3, the monolithic containing shell 8 is provided with a lower surface 9 shaped to couple with the base structure 5 without all the components 7 of the upholstery 6 and with an upper surface 10 which is opposite the lower surface 9 and is shaped to house the body of the occupant of the seat 1 (namely the upper surface 10 of the containing shell 8 reproduces in negative the shape of the body of the occupant of the seat 1).

In other words, the containing shell 8 is completely different from and independent of the components 7 of the upholstery 6 and is usable only to replace the components 7 of the upholstery 6 (namely it is usable only as an alternative to the components 7 of the upholstery 6). The containing shell 8 can be laid on the base structure 5 without the components 7 of the upholstery 6 only if and when the backrest 3 of the base structure 5 is locked in the predetermined position relative to the cushion 2 of the base structure 5; namely, the lower surface 9 of the containing shell 8 is shaped to couple with the base structure 5 without all the components 7 of the upholstery 6 only when the base structure 5 has a predetermined shape which is obtained only when the backrest 3 of the base structure 5 is locked in the predetermined position relative to the cushion 2 of the base structure 5.

Preferably, the containing shell 8 has an "L" shape with a fairly open angle.

According to a preferred embodiment, the containing shell 8 has through openings for the passage of the safety belts (especially when there are four, five or six-point safety belts). According to a possible embodiment, the containing shell 8 comprises at least one ventilation channel 11 which leads to the upper surface 10 and, on the side opposite the upper surface 10, can be connected to an air conditioning system. In this way, the containing shell 8 becomes *"ventilated"* to increase the comfort of the occupant of the seat 1.

According to a possible embodiment, the containing shell 8 comprises at least a fixing plate 12 which is arranged at the lower surface 9, is preferably made of metal material (in particular aluminium due to its lightness), and is configured to fix the containing shell 8 to the base structure 5. Namely, the containing shell 8 is fixed to the base structure 5 via the fixing plate 12 (or the fixing plates 12 if there are more than one). The fixing plate 12 can be glued to the lower surface 9 of the containing shell 8 and can have a curved shape to follow the shape of the containing shell 8.

According to a possible embodiment, a unique identification element 13 detectable at a distance by means of an electromagnetic wave interrogation is fixed (typically glued) to the containing shell 8. By way of example, the identification element 13 could use RFID technology and therefore the identification element 13 could be a passive transponder. In use, a control unit of the car detects the presence of the identification element 13 to establish whether the containing shell 8 is mounted or not in the seat 1; in fact, the control unit of the car allows use of the containing shell 8 only and exclusively when the car is on the racing track since use of the containing shell 8 is not approved for use on public roads. In other words, the control unit of the car is connected to a reader device that detects the possible presence of the identification element 13 to prevent starting of the car in the presence of the containing shell 8 if the car is not on a racing track.

According to a possible embodiment, the containing shell 8 is covered by means of a fabric (or similar) which is preferably glued to increase the tactile comfort of the containing shell 8.

According to a preferred embodiment, when used, the containing shell 8 is pushed towards the base structure 5 by the thrust which at least one tightened safety belt exerts on the occupant of the seat 1 accommodated on the upper surface 10 of the containing shell 8. Namely, in use, the containing shell 8 is kept in contact with the base structure 5 not only by a coupling system between the containing shell 8 and the base structure 5 (preferably via the at least one fixing plate 12) but is kept in contact with the base structure 5 also by the thrust generated by the tightened safety belt which presses the occupant of the seat 1 down towards the base structure 5 (with the interposition of the containing shell 8).

According to a preferred embodiment, the containing shell 8 is made of a rigid foam (for example a polyurethane foam).

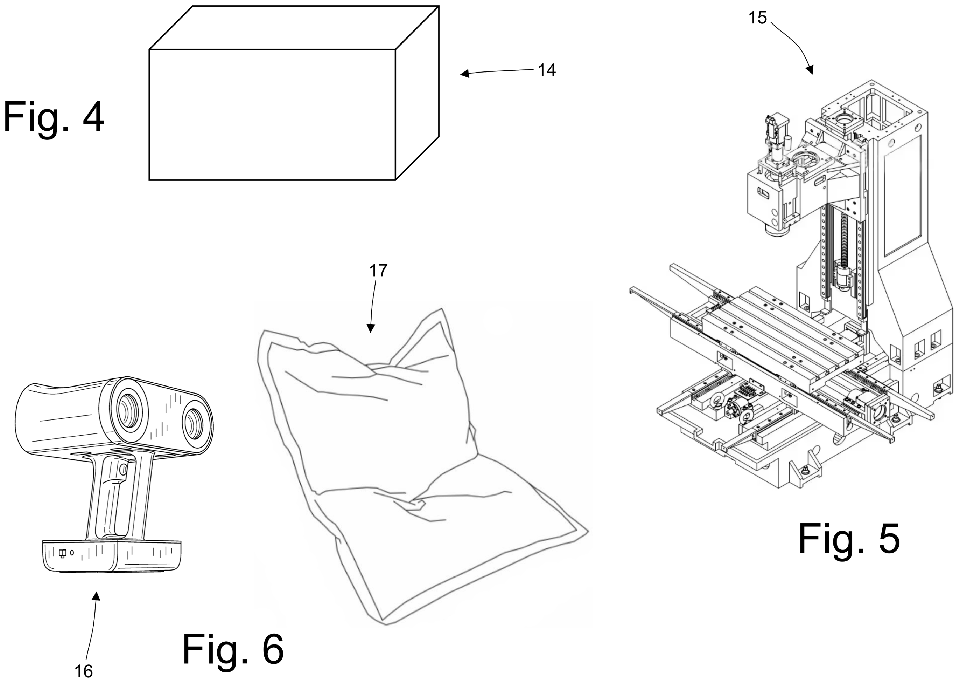

Manufacturing of the containing shell 8 entails processing a solid block 14 of rigid foam (illustrated in figure 4 and having a more or less parallelepipedal shape) to obtain the containing shell 8; in particular, the block of rigid foam 14 is processed by means of a numerical control machine tool 15 (illustrated schematically in figure 5). Preferably, a three-dimensional model of the body of the occupant of the seat 1 is created, arranged in a preferred driving position; the numerical control machine tool 15 is then controlled to model the upper surface 10 of the containing shell 8 so as to reproduce in negative the shape of the body of the occupant of the seat 1.

According to a preferred embodiment, a cast of the body of the occupant of the seat 1 arranged in the preferred driving position is obtained; the cast is then scanned by means of a three-dimensional scanner 16 (illustrated schematically in figure 5) to create the three-dimensional model.

According to a preferred embodiment, to obtain the cast of the body of the occupant of the seat 1, the occupant of the seat 1 is seated on the base structure 5 without the components 7 of the upholstery 6 (assuming the desired driving position) with the interposition of a bag 17 (illustrated schematically in figure 6) filled with a deformable material which can be hardened (polymerized); after the bag 17 has taken the shape of the body of the occupant of the seat 1 (namely when the occupant of the seat 1 has impressed the shape of his/her body on the bag 17), the deformable material arranged inside the bag 17 is hardened (polymerized). According to a preferred embodiment, the deformable material contained in the bag 17 is composed of a mixture of spheres, in particular made of polystyrene, and a hardening resin; alternatively, the bag 17 is filled with expandable foam (namely a liquid which expands until it becomes foam) when it is exposed to heat. Generally the heat of the body of the occupant should be sufficient to obtain sufficient hardening of the deformable material arranged inside the bag 17. It is important to underline that the seat 1 can be a single seat arranged in a front or rear position (as illustrated in the attached figures) or can be a double or triple seat arranged in a rear position.

The embodiments described here can be combined with one another. The above-described customization method of the seat 1 has numerous advantages.

Firstly, the above-described customization method of the seat 1 reduces the fatigue of the occupant of the seat 1 during high-performance driving (which subjects the occupant of the seat 1 to continuous very high transverse accelerations) and therefore increases the comfort of the occupant of the seat 1 during high-performance driving (especially when driving is prolonged for a considerable time such as, for example, during an Endurance race). In fact, an Endurance event or an entire day on the racing track can affect the fatigue and concentration of the driver and it is therefore very important to limit as far as possible fatigue due to driving. In this regard, it is important to note that the containing shell 8 can have very pronounced lateral containing walls and above all can have minimum (almost null) play with the hips of the occupant of the seat 1; it is therefore the shape of the containing shell 8 that laterally retains the occupant of the seat 1 without the occupant of the seat 1 having to make any particular physical effort to counter the lateral accelerations.

In other words, thanks to the above-described customization method of the seat 1, the containing shell 8 fits like a glove around the body of the occupant of the seat 1 and therefore the seat 1 can become an extension of the body of the occupant, so that the occupant feels part of the car.

Furthermore, the containing shell 8 is perfectly compatible with the standard safety belts of the car and therefore does not require the installation of new safety belts.

Lastly, the above-described customization method of the seat 1 is relatively inexpensive as it uses the existing base structure 5 of the seat 1 and uses the existing safety belts, and since the material used for manufacturing the containing shell 8 (namely a rigid foam) has a modest cost and is easy to process.

### LIST OF REFERENCE NUMBERS OF THE FIGURES

- 1: seat
- 2: cushion
- 3: backrest
- 4: headrest
- 5: base structure
- 6: upholstery
- 7: components
- 8: containing shell
- 9: lower surface
- 10: upper surface
- 11: ventilation channel
- 12: fixing plate
- 13: identification element
- 14: block
- 15: machine tool
- 16: three-dimensional scanner
- 17: bag

## Claims

1. A method to customize a seat (1) of a car to be used on a racing track;
wherein the seat (1) comprises a base structure (5), which is rigid, is configured to be fixed to a floorboard of the car and is divided into a cushion (2) and a backrest (3), which are movable relative to each another;
wherein the seat (1) comprises an upholstery (6), which is elastically deformable, at least partially covers the base structure (5), constitutes the outermost part of the seat (1) in contact with a body of an occupant of the seat (1) and has a series of components (7) which are fixed to the base structure (5) in a detachable manner so as to be removable;
wherein the customization method comprises the step of removing all the components (7) of the upholstery (6) from the base structure (5);
the customization method is **characterized in that** it comprises the steps of:
manufacturing a monolithic containing shell (8) which is rigid, is completely different from and independent of the components (7) of the upholstery (6), can be used only to replace the components (7) of the upholstery (6), is provided with a lower surface (9) shaped so as to be coupled to the base structure (5) without all the components (7) of the upholstery (6), and an upper surface (10) which is opposite the lower surface (9) and is shaped so as to accommodate the body of the occupant of the seat (1);
placing and locking the backrest (3) of the base structure (5) in a predetermined position relative to the cushion (2) of the base structure (5); and
laying, only if and when the backrest (3) of the base structure (5) is locked in the predetermined position relative to the cushion (2) of the base structure (5), the containing shell (8) on the base structure (5) without the components (7) of the upholstery (6) to replace the components (7) of the upholstery (6).

2. The customization method according to claim 1 and comprising the step of coupling the containing shell (8) to the base structure (5).

3. The customization method according to claim 1 or 2, wherein, in use, the containing shell (8) is pushed towards the base structure (5) by the thrust that at least one tightened safety belt exerts upon the occupant of the seat (1) accommodated on the upper surface (10) of the containing shell (8).

4. The customization method according to claim 1, 2 or 3, wherein the containing shell (8) comprises one single undivided and indivisible body.

5. The customization method according to one of the claims from 1 to 4, wherein the containing shell (8) has at least one through opening for the passage of at least one safety belt.

6. The customization method according to one of the claims from 1 to 5, wherein the containing shell (8) is made of a rigid foam.

7. The customization method according to one of the claims from 1 to 6, wherein the step of manufacturing the containing shell (8) entails processing a solid block (14) of rigid foam to obtain the containing shell (8).

8. The customization method according to claim 7, wherein the rigid foam block (14) is processed by means of a numerical control machine tool (15).

9. The customization method according to claim 8, wherein the step of manufacturing the containing shell (8) entails:
creating a three-dimensional model of the body of the occupant of the seat (1) in a preferred driving position; and
controlling the numerical control machine tool (15) to model the upper surface (10) of the containing shell (8) so as to reproduce in negative the shape of the body of the occupant of the seat (1).

10. The customization method according to claim 9, wherein the step of manufacturing the containing shell (8) entails:
obtaining a cast of the body of the occupant of the seat (1) in the preferred driving position; and
scanning the cast by means of a three-dimensional scanner (16) to create the three-dimensional model.

11. The customization method according to claim 10, wherein obtaining the cast entails:
seating the occupant of the seat (1) on the base structure (5) without the components (7) of the upholstery (6) with the interposition of a bag (17) filled with a deformable material that can be hardened; and
hardening the deformable material when the occupant of the seat (1) has impressed the shape of his/her body.

12. The customization method according to claim 11, wherein the deformable material consists of a mixture of spheres, in particular of polystyrene, and of a hardening resin.

13. The customization method according to one of the claims from 1 to 12, wherein the containing shell (8) comprises at least one ventilation channel (11) that leads to the upper surface (10) and, on the side opposite the upper surface (10), can be connected to an air conditioning system.

14. The customization method according to one of the claims from 1 to 13, wherein the containing shell (8) comprises at least one fixing plate (12), which is located in the area of the lower surface (9), is preferably made of a metal material, in particular aluminium, and is configured to fix the containing shell (8) to the base structure (5).

15. The customization method according to one of the claims from 1 to 14 and comprising the steps of:
fixing to the containing shell (8) a unique identification element (13), which can be remotely detected by means of an electromagnetic wave interrogation; and
detecting the presence of the identification element (13) to establish whether the containing shell (8) is mounted in the seat (1).

16. The customization method according to one of the claims from 1 to 15 and comprising the step of covering the containing shell (8) by means of a fabric, which is preferably glued.

17. A monolithic containing shell (8) configured to be used in the customization method according to one of the claims from 1 to 16.

18. A car comprising a seat (1) presenting a base structure (5), which is rigid, is fixed to a floorboard of the car and is divided into a cushion (2) and a backrest (3), which are movable relative to each another;
wherein the seat (1) comprises an upholstery (6), which is elastically deformable, at least partially covers the base structure (5), constitutes the outermost part of the seat (1) in contact with a body of an occupant of the seat (1) and has a series of components (7) which are fixed to the base structure (5) in a detachable manner so as to be removable;
the car is **characterized in that** it comprises a monolithic containing shell (8) which is rigid, is completely different from and independent of the components (7) of the upholstery (6), can be used only to replace the components (7) of the upholstery (6), is provided with a lower surface (9), which is shaped to couple with the base structure (5) only when the backrest (3) of the base structure (5) is arranged and locked in a predetermined position relative to the cushion (2) of the base structure (5) and only when all the components (7) of the upholstery (6) have been removed from the base structure (5), and is provided with an upper surface (10), which is opposite the lower surface (9) and is shaped so as to accommodate the body of the occupant of the seat (1).
